# EUROPEAN PATENT APPLICATION

(11) **EP 2 045 500 A1**
(43) Date of publication of application: **08.04.2009**
(21) Application number: 08165632.4
(22) Date of filing: 01.10.2008
(51) Int. Cl.: F16L 33/01, F16L 33/16

(54) **Connecting structure for a pipe**

(30) Priority: 02.10.2007 NL 2000892
(71) Applicant: Pipelife Nederland B.V., 1601 MA Enkhuizen (NL)
(72) Inventor: Cloos, Peter Jeroen, 1602 HZ Enkhuizen (NL); Dalmolen, Lambertus Gerrit Peter, 1019 SE Amsterdam (NL)
(74) Representative: van Westenbrugge, Andries

(57) **Abstract**

Connecting structure between a pipe (1) and a coupling (5). The pipe has an inner lining (2) and a fibre-reinforced layer (3) surrounding the lining. The coupling has a coupling piece (7) having an outer wedge-shaped surface (9), a sleeve (8) surrounding the coupling piece, the inner surface of which sleeve is formed to match the outer wedge-shaped surface of the coupling piece (7), as well as a coupling end (12) which interacts with the coupling piece. The fibre-reinforced layer is accommodated between the coupling piece and the sleeve and is clamped in between. The outer surface of the coupling piece has at least two portions (18,19) with different wedge angles and the inner surface of the sleeve has two correspondingly formed portions (21,22) with different wedge angles.

## Description

The invention relates to a connecting structure between a pipe and a coupling, which pipe comprises an inner lining and a fibre-reinforced layer surrounding the lining, and which coupling comprises a coupling piece having an outer wedge-shaped surface, a sleeve surrounding the coupling piece, the inner surface of which sleeve is formed to match the outer wedge-shaped surface of the coupling piece, as well as a coupling end which interacts with the coupling piece, in which at least the fibre-reinforced layer is accommodated between the coupling piece and the sleeve and is clamped inbetween in such a manner that the coupling end protrudes from the pipe.

A connecting structure of this type is known. The operation of a connecting structure of this type is based on the clamping action which occurs between the wedge-shaped surfaces of the coupling facing one another. This clamping action occurs as soon as the coupling is fixed, but the clamping action is increased further by pressurizing the pipe. In that case, the respective layer or layers which are situated between the wedge-shaped surfaces move slightly over the wedge-shaped surfaces, namely in the direction of the smallest cross section thereof As a result of this displacement, the wedge-shaped surfaces are moved still further towards one another slightly, which increases the clamping action.

Although this advantageous effect is desired, it does, however, also have a drawback. This drawback is formed by the fact that, as a result of the displacement of the clamped layer or layers, an excess of material will occur outside the coupling, leading to a bulge. Such a bulge is disadvantageous as it results in a weakening of the pipe. The bulge becomes larger as the displacement of the clamped layer or layers increases, which displacement is involved in achieving the clamping action. This displacement could be limited by increasing the steepness of the wedge shape. However, this has the drawback that it is inconvenient to slide the respective layers over the wedge shape: the steeper the wedge, the more the layers have to be stretched in order to be moved up over a certain distance.

It is therefore an object of the invention to provide a connecting structure of the above-described type which, on the one hand, makes it possible to slide the outermost layers or layer over the wedge shape in a simple manner, but which, on the other hand, provides a strong clamping action without the layers having to be slid back over a great distance. This object is achieved by the fact that the outer surface of the coupling piece has at least two portions with different wedge angles and the inner surface of the sleeve has two correspondingly formed portions with different wedge angles.

With the connecting structure according to the invention, the ring piece has different portions, which also serve different purposes. The first portion, which is used to slide the layer or layers which are to be clamped thereover, may have a relatively small wedge angle in order to facilitate moving up. However, the other portion may have a larger wedge angle which is suitable for clamping the layer or layers without requiring an excessively large displacement. In this manner, two requirements which normally conflict with one another, i.e. on the one hand installing the ring piece and, on the other hand, clamping the ring piece and the respective layer or layers together can be reconciled with one another. The main advantage thereof is that no additional measures have to be taken with regard to installing the ring piece and/or with regard to achieving the desired clamping action.

The most important layer which is to be clamped is the fibre-reinforced layer. This fibre-reinforced layer plays an essential part in transmitting the tensile loads in the pipe. In addition, the pipe also has an outer cladding, although this is not always required. This outer cladding can be removed from the fibre-reinforced layer along the section of the latter which has to be clamped. However, this is not always necessary, and therefore, it is possible to clamp said cladding together with the fibre-reinforced layer between the ring piece and the sleeve in the case of a pipe which comprises an outer cladding.

The ring piece may be a separate part, which is slid over a section of the coupling end with a relatively small diameter. In that case, the inner cladding of the pipe may be accommodated between the coupling piece and the section of the coupling end having a relatively small diameter. The reinforced layer and any outer cladding extend over the exterior of the coupling piece and are clamped between that coupling piece and the opposite surface of the sleeve.

However, according to a further variant, the coupling piece may be formed as a single part with the coupling end. In that case, all layers of the pipe extend over the outer surface of the coupling piece.

With a view to achieving the desired clamping action, the inner surface of the sleeve also has a suitably modified shape. Although the portion of the sleeve with a small wedge angle which adjoins the corresponding section of the ring piece with a small wedge angle, is not strictly necessary in order to achieve the desired moving up of the fibre-reinforced layer onto the ring piece. Nevertheless, it is useful also to adapt the inner surface of the sleeve thereto, in order to be able to make effective use of the, albeit small, wedge action which these surfaces have for clamping the fibre-reinforced layer. In addition, the reinforced layer is also clamped between the portion of the sleeve with a relatively large wedge angle and the portion of the ring piece with a relatively large wedge angle.

The various portions of the ring piece have different angles of inclination, preference being given to an embodiment in which the front section of the ring piece has an angle of inclination of between 5 and 10 degrees. In this connection, the rear section may have an angle of inclination of between 10 and 20 degrees. However, the embodiment which is most preferred has a front section with an angle of inclination of approximately 7 degrees and a rear section with an angle of inclination of approximately 14 degrees.

The ring piece may be provided with an outer toothing in order to increase the clamping action. An embodiment is preferred in which the toothing is in a saw-tooth shape, in such a manner that the inclination of the saw-tooth shape with the smallest angle of inclination is directed to the front. In addition, the toothing may run around the ring piece in the shape of a helix in such a manner that an axial displacement of the ring piece is possible by turning the latter.

Furthermore, the ring piece may be provided with an interruption in such a manner that the diameter thereof can be adapted by elastic deflection of the ring piece. Preferably, the interruption is designed as an incision which intersects the centre axis of the ring piece. This interruption makes it possible for the ring piece to clamp the fibre-reinforced layer in a more efficient manner when clamping the latter.

The invention will now be described with reference to an exemplary embodiment illustrated in the figures, in which:
Fig. 1 shows a connecting structure according to the invention between two pipes;
Fig. 2 shows the enlarged detail II from Fig. 1;
Fig. 3 shows the ring piece as used in the connecting structure according to the invention;
Fig. 4 shows the enlarged detail IV from Fig. 3;
Fig. 5 shows the sleeve as used in the connecting structure according to the invention;
Fig. 6 shows the connecting structure from Fig. 1, in which an inner overpressure is applied.

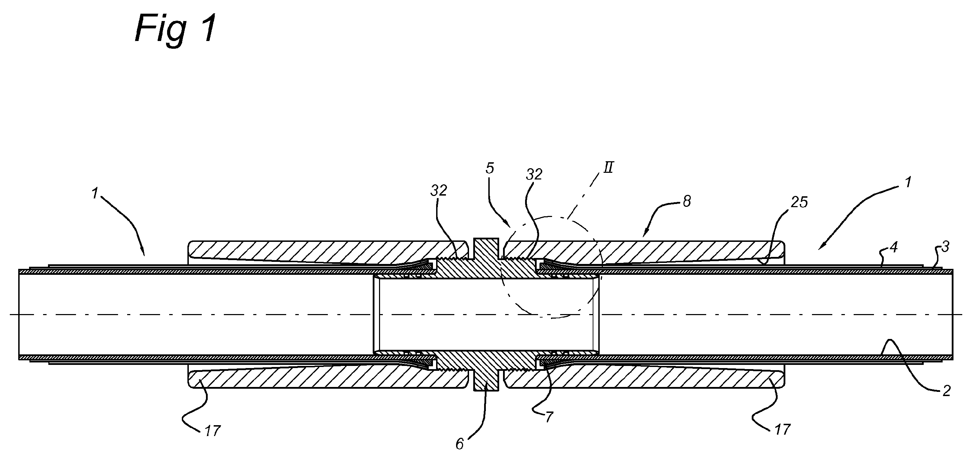

In Fig. 1, a double connecting structure according to the invention is used. This connecting structure is symmetrical, so that only one half thereof will be described. The connecting structure is situated between two pipes 1, each of which has an inner lining 2 and a reinforced layer 3 surrounding this lining 2. Furthermore, each pipe 1 has an outer cladding 4.

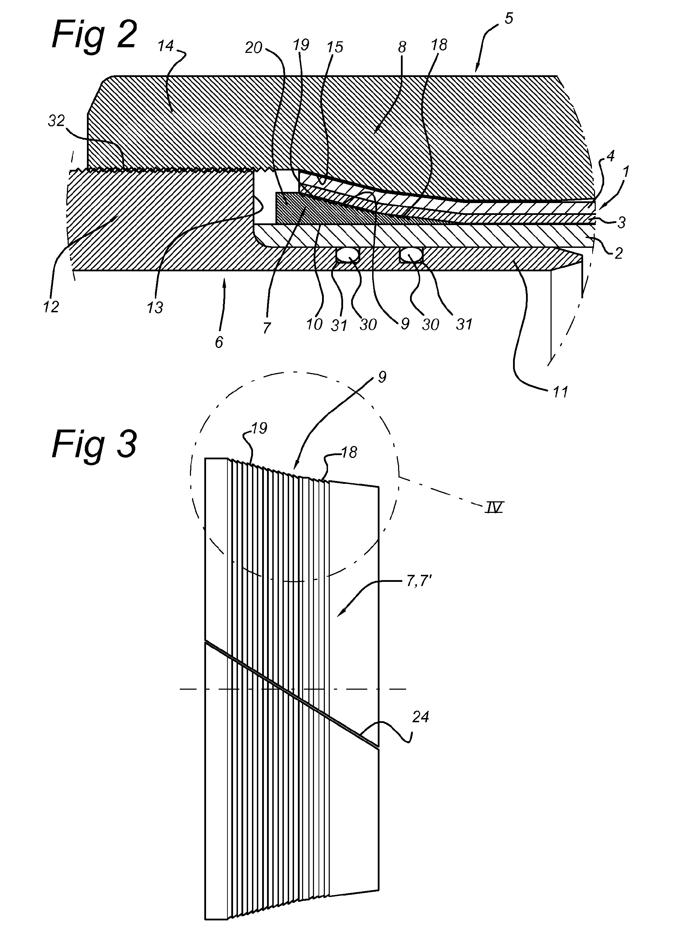

As is shown in Fig. 2 on an enlarged scale, the connecting structure furthermore consists of a coupling 5 which comprises the coupling end 6, the ring piece 7 and the sleeve 8. The ring piece 7 has an outer wedge-shaped surface 9, and an inner cylindrical surface 10. At one end, the ring piece 7 furthermore has an outer cylindrical section 20. The coupling end 6 has a cylindrical section 11 with a relatively small diameter over which the inner cladding 2 is rolled. By means of O-rings 30, accommodated in external grooves 31 of the cylindrical section 11 having the coupling end 6 with a relatively small diameter, the sealing between the inner cladding 2 and the coupling end 6 is ensured. Furthermore, the coupling end 6 has a cylindrical section 12 with a relatively large diameter; between these cylindrical sections 11, 12 a shoulder 13 is provided against which the end of the inner cladding 2 bears.

The sleeve 5 has a cylindrical section 14 which is screwed on the cylindrical section 12 of the coupling piece 6 with a relatively large diameter by means of a screw thread 32. Adjacent thereto, the sleeve 8 has an inner surface 15 with a wedge shape which corresponds to the wedge shape of the surface 9 of the ring piece 7. Adjacent thereto, a cylindrical section 16 with a relatively small axial length is provided and, finally, an expanding section 17.

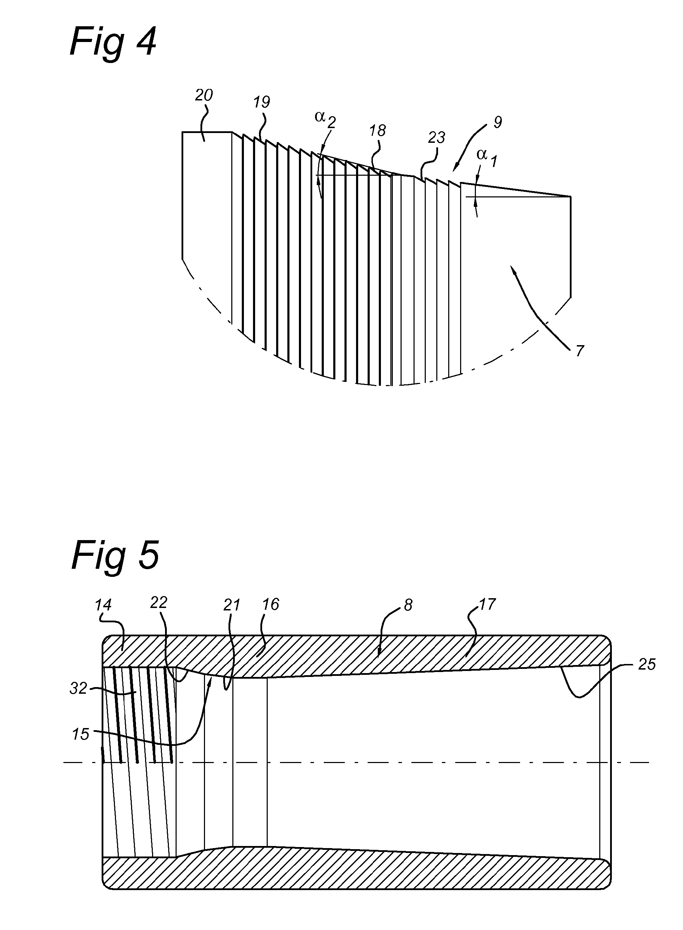

The wedge-shaped surface 9 of the ring piece 7, which is also illustrated in Figs. 3 and 4, has two portions 18, 19 with different wedge angles alpha1 and alpha2, respectively. The angle alpha1 is smaller than the angle alpha2 and is, in particular, approximately half thereof, for example 7 degrees and 14 degrees, respectively.

When producing the connecting structure according to the invention, the ring piece with the portion 18 which has the relatively small wedge angle alpha1, is slid between the reinforced layer 3 and the inner lining 2. Then, the coupling piece 6 is pushed into the inner lining 2. Subsequently, the sleeve 8 is slid over the outer cladding 1 and the reinforced layer 3 and screwed onto the coupling end 6, with the wedge-shaped surface 15 of the sleeve coming to lie opposite the wedge-shaped surface 9 of the ring piece 7. With a view thereto, the sleeve 8 also has two portions 21 and 22, respectively, which lie opposite, and are formed to match the corresponding portions 18 and 19, respectively, of the ring piece 7.

Sliding the reinforced layer 3 over the portion 18 of the ring piece 7 is relatively easy, due to the small wedge angle thereof. However, clamping the reinforced layer 3 mainly takes place at the other portion 19 which has a relatively large wedge angle. Clamping thereof can thus be carried out without the reinforced layer 3 having to be pushed back very far before the definitive clamping action is achieved.

As has been mentioned before and illustrated in Fig. 5, the sleeve 8 has a slightly expanding section 17. This section 17 supports the pipe 1 when it is being pressurized. The pipe 1 can then expand gradually from the cylindrical section 16 up to the diameter which corresponds to the respective pressure.

As is illustrated in Figs. 3 and 4, the ring piece 7 has an outer toothing 24 which is in the shape of a saw-tooth. The slight inclination of the saw-tooth shape is directed towards the pipe 1, so that moving up thereof is facilitated. Furthermore, the saw-tooth may run in the shape of a helix, in such a manner that the ring piece 7 and the pipe 1 can be matched to one another by rotation. Furthermore, the ring piece 7 has an oblique incision 24, which makes it possible to modify the diameter of the ring piece 7 slightly during clamping.

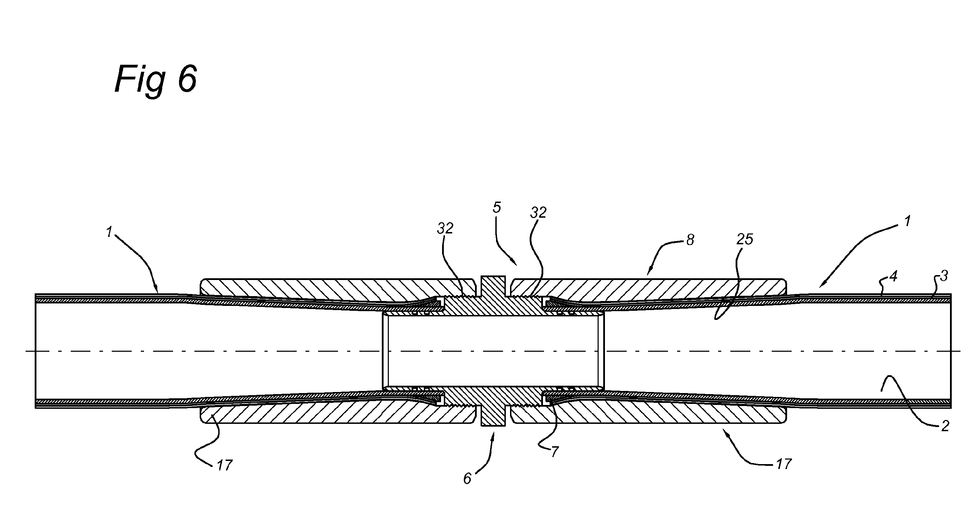

Fig. 6 shows how the pipes 2 are supported by the inner surface 25 of the sleeve 8 expanding outwardly when applying an inner overpressure.

## Claims

1. Connecting structure between a pipe (1) and a coupling (5), which pipe (1) comprises an inner lining (2) and a fibre-reinforced layer (3) surrounding the lining (2), and which coupling (5) comprises a coupling piece (7) having an outer wedge-shaped surface (9), a sleeve (8) surrounding the coupling piece (7), the inner surface of which sleeve is formed to match the outer wedge-shaped surface of the coupling piece (7), as well as a coupling end (12) which interacts with the coupling piece (7), in which at least the fibre-reinforced layer (3) is accommodated between the coupling piece (7) and the sleeve (8) and is clamped inbetween in such a manner that the coupling end (12) protrudes from the pipe, **characterized in that** the outer surface (9) of the coupling piece (7) has at least two portions (18, 19) with different wedge angles and the inner surface of the sleeve (8) has two correspondingly formed portions (21, 22) with different wedge angles.

2. Connecting structure according to Claim 1, in which the portions (18, 19) of the wedge-shaped surface (9) of the coupling piece (7) adjoin one another directly and the portions (21, 22) of the wedge-shaped surface of the sleeve (8) correspondingly adjoin one another directly.

3. Connecting structure according to Claim 1 or 2, in which the reinforced layer (3) is clamped between both portions (18, 19) of the wedge-shaped surface (9) of the coupling piece (7) and both portions (21, 22) of the wedge-shaped surface of the sleeve (8).

4. Connecting structure according to one of the preceding claims, in which the coupling piece (7) comprises a separate coupling ring (7') and the coupling end (12) is provided with a tube piece (6) which extends through the coupling ring (7'), in such a manner that the lining is situated between the tube piece (6) and the coupling ring (7').

5. Connecting structure according to Claim 4, in which the tube piece (6) has a shoulder (13) and the lining (2) is opposite or bears against the shoulder (13).

6. Connecting structure according to Claims 4 and 5, in which the coupling ring (7') is opposite or bears against the shoulder (13).

7. Connecting structure according to one of Claims 4-6, in which the sleeve (8) has an inner cylindrical portion (14) which adjoins the wedge-shaped portion (22) with the largest wedge angle, which cylindrical portion (14) extends over the tube piece (6).

8. Connecting structure according to Claim 7, in which the cylindrical portion (14) of the sleeve (8) surrounds a portion (12) of the tube piece (6) with a relatively large diameter in a tight-fitting manner.

9. Connecting structure according to one of the preceding claims, in which the ring piece (7) has a front section with a relatively small wedge angle and an adjoining rear section with a relatively large wedge angle.

10. Connecting structure according to one of the preceding claims, in which the front section of the ring piece (7) has an angle of inclination of between 5 and 10 degrees.

11. Connecting structure according to one of the preceding claims, in which the rear section of the ring piece (7) has an angle of inclination of between 10 and 20 degrees.

12. Connecting structure according to one of the preceding claims, in which the front section of the ring piece (7) has an angle of inclination of approximately 7 degrees and the rear section has an angle of inclination of approximately 14 degrees.

13. Connecting structure according to one of the preceding claims, in which the ring piece (7) has an outer toothing (23), for example having a saw-tooth shape, in such a manner that the inclination of the saw-tooth shape with the smallest angle of inclination is directed to the front.

14. Connecting structure according to Claim 12 or 13, in which the toothing (23) runs around the ring piece (7) in the shape of a helix.

15. Connecting structure according to one of the preceding claims, in which the ring piece (7) is provided with an interruption (24), such as an incision (24) intersecting the centre axis of the ring piece (7), in such a manner that the diameter thereof can be adapted by elastic deflection of the ring piece (7).
